# EUROPÄISCHE PATENTANMELDUNG

(11) **EP 0 578 088 A2**
(43) Veröffentlichungstag der Anmeldung: **12.01.1994**
(21) Anmeldenummer: 93110269.3
(22) Anmeldetag: 28.06.1993
(51) Int. Cl.: C08F 255/02, C08G 18/63, C09D 151/06, C09J 151/06, C09D 175/04, C08J 7/04

(54) **Verfahren zur Herstellung von organischen Polyhydroxylverbindungen und ihre Verwendung als Bindemittelkomponente**

(30) Priorität: 09.07.1992 DE 4222516
(71) Anmelder: BAYER AG, 51368 Leverkusen (DE)
(72) Erfinder: Hovestadt, Wieland, Dr., D-47802 Krefeld (DE); Petzold, Joachim, Dr., D-40764 Langenfeld (DE); Schneider, Volker, Dr., D-47669 Wachtendonk (DE); Henning, Wolfgang, Dr., Sumitomo Bayer Urethane, Amagasaki, Hyogo Pref. (JP); Sirinyan, Kirkor, Dr., D-51467 Bergisch Gladbach (DE); Blum, Harald, Dr., D-47669 Wachtendonk (DE)

(57) **Zusammenfassung**

Ein Verfahren zur Herstellung von organischen Polyhydroxylverbindungen durch radikalisch initiierte Polymerisation von olefinisch ungesättigten, zumindest teilweise alkoholische Hydroxylgruppen aufweisenden Monomeren a), gegebenenfalls unter Mitverwendung von, in Gegenwart von alkoholischen Hydroxylgruppen zu ringöffnenden Polyadditionsreaktionen befähigten cyclischen Verbindungen b) in c) flüssigen Polymerisaten oder Copolymerisaten des Propylens oder deren Lösungen in organischen Lösungsmitteln als Reaktionsmedium, die nach diesem Verfahren erhaltenen Polyhydroxylverbindungen und ihre Verwendung als Bindemittelkomponente für Beschichtungsmittel, Dichtmassen, Klebstoffe oder Druckfarben.

## Beschreibung

Die Erfindung betrifft ein Verfahren zur Herstellung von organischen Polyhydroxylverbindungen durch (Co)Polymerisation von zumindest teilweise Hydroxylgruppen tragenden, olefinisch ungesättigten Monomeren in Gegenwart von als Pfropfgrundlage dienenden Propylen-Polymerisaten oder -Copolymerisaten, die hierbei erhaltenen Polyhydroxylverbindungen und ihrer Verwendung als Bindemittelkomponente für Beschichtungsmittel, Dichtmassen, Klebstoffe oder Druckfarben, insbesondere für Beschichtungsmittel für Kunststoffe.

Es ist of wünschenswert, Kunststoffe zu beschichten, insbesondere auf Polypropylenspritzgußteilen ist es jedoch sehr schwierig, eine gute Haftfestigkeit der Beschichtung zu erzielen.

Bekanntermaßen kann die Haftung durch eine chemische oder physikalische Vorbehandlung der Substratoberfläche verbessert werden. Genannt seien Beflammen, Coronabehandlung, Plasmabehandlung oder Beizen mit Schwefelsäure. Die Vorbehandlungen sind im allgemeinen sehr umständlich.

Die Literatur beschreibt weiterhin die Verwendung von Primern auf Basis von chlorierten Polyolefinen (US-PS 3 676 391), die häufig durch Maleinsäureanhydrid modifiziert sind (EP-A 0 148 346, DE-OS 3 936 663). Die DE-PS 1 546 982 ihrerseits beschreibt einen chlorfreien Primer aus einem amorphen, mit ethylenisch ungesättigten Carbonsäuren modifizierten Propylenpolymerisat.

Neuere Bestrebungen gehen dahin, auf Primer zu verzichten und den Kunststofflacken stattdessen einen Haftvermittler als Additiv beizumengen. Die Verwendung von chlorierten Polypropylenen (US-PS 2 468 480) hat den Nachteil, daß diese Haftvermittler in üblichen Lacklösemitteln nur schlecht löslich und außerdem mit den meisten Lacken nur schlecht verträglich sind. In DE-OS 3 909 217 werden amorphe, chlorierte und säuremodifizierte Polypropylene eingesetzt. Aber auch diese Haftvermittler sind mit den meisten Kunststofflacken unverträglich und neigen zum Absetzen. Aus ökologischen Gründen gewinnen außerdem chlorfreie Systeme immer mehr an Bedeutung.

Es war daher die der Erfindung zugrundeliegende Aufgabe, neue Bindemittelkomponenten zur Verfügung zu stellen, die die Herstellung von auf Kunststoffen gut haftenden Beschichtungsmitteln ermöglichen, ohne auf die Mitverwendung von chlorhaltigen Produkten oder sonstigen speziellen Additiven bzw. auf die Vorbehandlung der Substrate mit Primern angewiesen zu sein.

Diese Aufgabe konnte mit der Bereitstellung des nachstehend näher beschriebenen erfindungsgemäßen Verfahrens zur Herstellung von organischen Polyhydroxylverbindungen gelöst werden. Bei den erfindungsgemäßen Verfahrensprodukten handelt es sich um organische Polyhydroxylverbindungen, die in Kombination mit üblichen Härtern zu Bindemitteln kombiniert werden können, die auf Kunststoffen, insbesondere Polyolefinen und ganz besonders bevorzugt Spritzgußteilen aus Polypropylen eine ausgezeichnete Haftung aufweisen. Ein weiterer Vorteil der erfindungsgemäßen Verfahrensprodukte ist in dem Umstand zu sehen, daß sie in organischen Lösungsmitteln leicht löslich sind und nicht zum Absetzen neigen.

Gegenstand der Erfindung ist ein Verfahren zur Herstellung von organischen Polyhydroxylverbindungen des Hydroxylzahlbereichs 15 bis 300 mg KOH/g durch radikalisch initiierte Polymerisation von
olefinisch ungesättigten Monomeren a), die zumindest teilweise alkoholische Hydroxylgruppen aufweisen,
gegebenenfalls unter Mitverwendung von bis zu 50 Gew.-%, bezogen auf das Gewicht der Monomeren a), an, in Gegenwart von alkoholischen Hydroxylgruppen zu ringöffnenden Polyadditionsreaktionen befähigten cyclischen Verbindungen b),
dadurch gekennzeichnet, daß man die Polymerisationsreaktion in
c) unter den Reaktionsbedingungen flüssigen Polymerisaten oder Copolymerisaten mit anderen Monomeren des Propylens oder in Lösungen von Polymerisaten oder Copolymerisaten mit anderen Monomeren des Propylens in organischen Lösungsmitteln als Reaktionsmedium durchführt.

Gegenstand der Erfindung sind auch die nach diesem Verfahren erhaltenen organischen Polyhydroxylverbindungen.

Gegenstand der Erfindung ist auch die Verwendung der nach diesem Verfahren erhaltenen organischen Polyhydroxylverbindungen als Bindemittelkomponente für Beschichtungsmittel, Dichtmassen, Klebstoffe oder Druckfarben.

Als Monomere a) kommen insbesondere a1) alkoholische Hydroxylverbindungen aufweisende Monomere, die vorzugsweise neben diesen Hydroxylgruppen keine H-aktiven Gruppen aufweisen, a2) Hydroxyl- und Carboxylgruppenfreie Monomere und a3) Carboxylgruppen aufweisende Monomere, die vorzugsweise neben den Carboxylgruppen keine weiteren H-aktiven Gruppen aufweisen, in Betracht.

Bezogen auf die Gesamtmenge, der vorzugsweise als Gemisch zum Einsatz gelangenden Monomeren kommen die Monomeren a1) in einer Menge von bis zu 100 Gew.-%, vorzugsweise 5 bis 50 Gew.-%, die Monomeren a2) in einer Menge von 0 bis 95; vorzugsweise 50 bis 95 Gew.-% und die Monomeren a3) in einer Menge von 0 bis 20, vorzugsweise 0 bis 10 Gew.-% zum Einsatz.

Geeignete Monomere a1) sind insbesondere Hydroxyalkylester α,β-ungesättigter Carbonsäuren, insbesondere von Acrylsäure oder Methacrylsäure mit 2 bis 12, vorzugsweise 2 bis 8, Kohlenstoffatomen im Hydroxyalkylrest. Beispielhaft genannt seien 2-Hydroxyethylacrylat, 2-Hydroxypropylacrylat, 1-(Hydroxymethyl)-ethylacrylat, 2-, 3- und 4-Hydroxybutylacrylat, die isomeren Hydroxypentylacrylate, die isomeren Hydroxyhexylacrylate, und die diesen Acrylaten entsprechenden Methacrylate. Die Hydroxylgruppen aufweisenden Hydroxyalkylester können sowohl primäre als auch sekundäre Hydroxylgruppen aufweisen. Grundsätzlich möglich ist auch eine Variante, derzufolge die beispielhaft genannten Hydroxylgruppen aufweisenden Monomeren ganz oder teilweise durch Modifizierungsprodukte ersetzt werden, die dadurch erhalten werden, daß die beispielhaft genannten Hydroxyalkyl(meth)acrylate einer Modifizierungsreaktion unterzogen werden. Geeignete derartige Modifizierungsreaktionen sind beispielsweise die Anlagerung von cyclischen Estern wie beispielsweise ε-Caprolacton unter ringöffnender Esterbildung oder die Anlagerung von Epoxiden wie beispielsweise Ethylenoxid, Propylenoxid oder Butylenoxid oder 2-Ethylhexyl-glycidylether im Sinne einer ringöffnenden Etherbildung. Anstelle der Anlagerung von Epoxiden an Hydroxyalkylester der genannten Art können selbstverständlich bei deren Herstellung durch Alkoxylierung von Acrylsäure beziehungsweise Methacrylsäure auch entsprechend höhere Mengen an Alkylenoxiden (mehr als 1 Mol Alkylenoxid pro Mol Säure) zum Einsatz gelangen, so daß unmittelbar Hydroxyl- und Ethergruppen aufweisende Ester der genannten Säuren entstehen, die dann als Monomere a1) zum Einsatz gelangen können.

Beliebige Gemische der beispielhaft genannten Monomeren a1) können gegebenenfalls Verwendung finden. Neben den beispielhaft genannten, bevorzugt als Monomere a1) einzusetzenden Verbindungen können als weitere hydroxyfunktionelle Monomere a1) auch beispielsweise Umsetzungsprodukte von (i) Säuren wie Acrylsäure, Methacrylsäure, Maleinsäure, Fumarsäure, Itaconsäure oder crotonsäure mit (ii) Polyepoxiden wie beispielsweise Bisphenol-A-diglycidylether in geringen Anteilen als Teil der Komponente a1) mitverwendet werden.

Geeignete Monomere a2) sind inbesondere einfach olefinisch ungesättigte Verbindungen des Molekulargewichtsbereichs 53 bis 400, vorzugsweise 80 bis 220. Hierzu gehören beispielsweise Acrylsäure- oder Methacrylsäure-alkylester oder -cycloalkylester mit 1 bis 18, vorzugsweise 1 bis 8 Kohlenstoffatomen im Alkylbeziehungsweise Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, Acrylnitril, Vinylether, Methacrylnitril, Vinylacetat, Styrol, Vinyltoluol oder beliebige Gemische derartiger Monomerer.

Neben diesen, bevorzugt als Monomere a2) zu verwendenden Verbindungen können auch beispielsweise epoxidfunktionelle ungesättigte Monomere wie Glycidylmethacrylat oder -acrylat in untergeordneten Mengen als Teil der Komponente a2) Verwendung finden.

Geeignete Monomere a3) sind beispielsweise ungesättigte Monocarbonsäuren, wie Acrylsäure, Methacrylsäure: Itaconsäure, Crotonsäure oder Halbester der Malein- und Fumarsäure mit einfachen einwertigen Alkoholen wie beispielsweise C₁-C₄-Alkanolen.

Bei der Durchführung des erfindungsgemäßen Verfahrens können gegebenenfalls in einer Menge von bis zu 50, vorzugsweise bis zu 30 Gew.-%, bezogen auf das Gewicht der Monomeren a) cyclische Verbindungen b) mitverwendet werden, die in Gegenwart von alkoholischen Hydroxylgruppen zu ringöffnenden Polyadditionsreaktionen befähigt sind. Derartige Verbindungen sind beispielsweise Lactone, wie ε-Caprolacton, Lactame wie ε-Caprolactam oder cyclische Carbonate, wie Neopentylglykolcarbonat.

Bevorzugte Verbindung b) ist ε-Caprolacton. Die Mitverwendung von derartigen Verbindungen b), insbesondere von ε-Caprolacton als monomere Ausgangsverbindung bei der Durchführung der erfindungsgemäßen Polymerisationsreaktion läuft im Endeffekt auf das gleiche hinaus wie die Verwendung von vorab entsprechend modifizierten Monomeren a1) der oben bereits angesprochenen Art. Auch die Modifizierung der unter Verwendung von unmodifizierten Monomeren a1) in Abwesenheit von Verbindungen b) hergestellten Copolymerisaten im Sinne derartiger Anlagerungsreaktionen im Anschluß an die Herstellung der Copolymerisate ist denkbar und würde eine äquivalente Arbeitsweise zu der Verwendung von modifizierten Monomeren a1) beziehungsweise von Ausgangskomponenten b) während der Durchführung des erfindungsgemäßen Verfahrens darstellen.

Erfindungswesentlich ist die Verwendung von Propylenpolymerisaten beziehungsweise -copolymerisaten c) als wesentliche Pfropfgrundlage. Hierbei handelt es sich bevorzugt um rein amorphes Polypropylen des Molekulargewichtsbereichs Mw 500 bis 300.000, bevorzugt 2.000 bis 200.000. Ebenfalls geeignet, jedoch weniger bevorzugt sind in organischen Lösungsmitteln lösliche, teilkristalline Polypropylene des genannten Molekulargewichts mit einem Kristallinitätsgrad von maximal 50, vorzugsweise maximal 30 % oder Mischpolymerisate aus Propylen und Ethylen und/oder Dienen, wie beispielsweise Ethylen/Propylen/Buten-Terpolymere des genannten Molekulargewichtsbereichs mit einem Propylengehalt von mindestens 70 Gew.-%. Die Molekulargewichtsangaben beziehen sich jeweils auf das gelchromatographisch unter Verwendung von Polystyrol als Standard bestimmte Molekulargewicht Mw.

Amorphe Polypropylene eines niederen Molekulargewichts von beispielsweise bis zu 100.000 stellen oftmals unter den Verfahrensbedingungen Flüssigkeiten dar und können unverdünnt als Reaktionsmedium c) zum Einsatz gelangen. Unter den Verfahrensbedingungen feste Propylenpolymerisate beziehungsweise -copolymerisate werden jedoch beim erfindungsgemäßen Verfahren vorzugsweise in Lösungen in geeigneten Lösungsmitteln eingesetzt. Das Polymerisationsmedium besteht somit zu 5 bis 100 Gew.-%, vorzugsweise zu 10 bis 50 Gew.-% aus Propylenpolymerisaten beziehungsweise -copolymerisaten c) und zu 0 bis 95, vorzugsweise 50 bis 90 Gew.-% aus Lösungsmitteln.

Als Lösungsmittel für die Komponente c) sind alle in der Lackindustrie gebräuchlichen Lösungsmittel geeignet, die unter den Polymerisationsbedingungen gegenüber den Monomeren und Verfahrensprodukten weitgehend inert sind, und in denen das Propylenpolymer c) bei der Polymerisationstemperatur löslich ist. Geeignet sind beispielsweise Ester, wie Ethylacetat, Propylacetat, n-Butylacetat, Isobutylacetat, sec.-Butylacetat, Amylacetat, Hexylacetat, Benzylacetat, Ethoxypropylacetat, Propylenglykolmethyletheracetat, Oxohexylacetat (®Exxate 600), Oxoheptylacetat (®Exxate 700), z.B. Ether wie Dibutylether, Dioxan, Dimethyldiglykol, Kohlenwasserstoff wie Benzin, Terpentinöl, Solvent Naphtha, Terpene, Toluol, Xylol, Ethylbenzol, Ketone wie Methylisobutylketon, Methyl-n-amylketon, Methylisoamylketon, Diethylketon, Ethylbutylketon, Diisopropylketon, Cyclohexanon oder beliebige Gemische derartiger Lösemittel. Bevorzugt sind Butylacetat und Xylol.

Das Gewichtsverhältnis der Gesamtmenge der Monomeren a) zu Polymerisaten bzw. Copolymerisaten c) liegt im allgemeinen bei 0,5:1 bis 20:1, vorzugsweise 1:1 bis 10:1.

Die erfindungsgemäße Polymerisationsreaktion wird im allgemeinen innerhalb des Temperaturbereichs von 60 bis 220°C durchgeführt, wobei übliche Radikalbildner als Polymerisationsinitiatoren, die für diesen Temperaturbereich geeignet sind, mitverwendet werden. Geeignet sind beispielsweise organische Peroxide, wie Dibenzoylperoxid, Di-tert.-butylperoxid, Dilaurylperoxid, tert.Butylperoctoat, tert.-Butylperoxymaleinat, tert.-Butylperoxybenzoat oder -peroxy-2-ethylhexanoat, Dicumylperoxid, Didecanoylperoxid oder Azoverbindungen wie 2,2'-Azobis(2,4-dimethylvaleronitril), 2,2'-Azobis(isobutyronitril), 2,2'-Azobis-(2,3-dimethylbutyronitril) oder 1,1'-Azobis-(1-cyclohexannitril). Die Initiatoren können in Mengen von 0,5 bis 15 Gew.-%, bezogen auf das Gesamtgewicht der Ausgangsverbindungen a) und b) eingesetzt werden.

Oftmals werden auch Molekulargewichtsregler wie beispielsweise n-Dodecylmercaptan oder t-Dodecylmercaptan in Mengen von bis zu 10 Gew.-%, bezogen auf das Gesamtgewicht der Ausgangsverbindungen a) und b) mitverwendet.

Die erfindungsgemäße Umsetzung wird üblicherweise unter Inertgas, beispielsweise Stickstoff, durchgeführt. Im allgemeinen wird zur Durchführung des erfindungsgemäßen Verfahren das Polymerisationsmedium, d.h. das PropylenPolymerisat bzw. -Copolymerisat c) oder dessen Lösung im Reaktionsgefäß vorgelegt und Monomerenmischung, Initiator und gegebenenfalls ein weiterer Teil Lösungsmittel innerhalb des genannten Temperaturbereichs kontinuierlich zudosiert. Nach beendeter Zugabe wird noch einige Zeit nachgerührt. Die Polymerisation wird im allgemeinen nach einem Monomerenumsatz von mehr als 96 %, bevorzugt mehr als 99 % beendet. Gegebenenfalls ist es erforderlich, durch nachträgliche Zugabe von geringen Initiatormengen, eine Nachaktivierung vorzunehmen, um den gewünschten Monomerenumsatz zu erreichen. Nur ausnahmsweise, bei bestimmten Monomerausgangszusammensetzungen ist es möglich, daß nach der Polymerisation größere Mengen an Restmonomeren im Copolymerisat enthalten sind. In einem solchen Fall, insbesondere wenn der Gehalt an Restmonomeren durch Nachaktivierung nicht weiter reduziert werden kann, empfiehlt sich eine destillative Entfernung der nichtumgesetzten Restmonomeren.

Zur Verbesserung der Pfropfrate ist es auch möglich, das Polymerisationsmedium zunächst nur mit einem Teil des Initiators zu versetzen und erst nach dem Zerfall dieser Menge mit der kontinuierlichen Zugabe des restlichen Initiators und der Monomermischung zu beginnen.

Die erfindungsgemäßen Verfahrensprodukte sind in üblichen Lacklösungsmitteln einwandfrei löslich und unterscheiden sich vorteilhaft von Gemischen aus entsprechenden Propylenpolymeren mit entsprechenden Hydroxylgruppen aufweisenden Copolymerisaten olefinisch ungesättigter Monomerer, die in organischen Lösungsmitteln leicht zur Entmischung neigen. Hieraus kann die Schlußfolgerung gezogen werden, daß es sich bei den erfindungsgemäßen Verfahrensprodukten vor allem um echte Pfropfpolymerisate handelt, für welche das eingesetzte Propylenpolymerisat bzw. -copolymerisat die Pfropfgrundlage bildet. Selbstverständlich kann jedoch nicht ausgeschlossen werden, daß in den erfindungsgemäßen Verfahrensprodukten neben der derartigen Pfropfpolymerisaten auch keine Pfropfpolymerisate darstellende, vorzugsweise Hydroxylgruppen aufweisende Copolymerisate vorliegen. Der Begriff "organische Polyhydroxylverbindungen" bezieht sich somit auf die Gesamtmenge des beim erfindungsgemäßen Verfahren anfallenden Gemischs abzüglich der unmodifiziert vorliegenden, Hydroxylgruppen-freien Lösungsmittel.

Die erfindungsgemäßen Verfahrensprodukte können im Anschluß an die Polymerisation gewünschtenfalls weiter modifiziert werden. Denkbare Modifizierungsaktionen sind beispielsweise die bereits oben angesprochene nachträgliche Modifizierung mit ringförmigen Verbindungen der als Komponente b) geeigneten Art oder beispielsweise die Umsetzung mit Glycidestern, Carbonsäureanhydriden wie Phthalsäureanhydrid, die Veresterung oder Umesterung mit Carbonsäuren beziehungsweise Carbonsäureestern wie Benzoesäure, Ethylhexansäure, Fettsäuren oder Ölsäure.

Durch diese Modifizierung können gewisse Eigenschaften wie Pigmentverträglichkeit und Alkalibeständigkeit verbessert werden.

Die erfindungsgemäßen Verfahrensprodukte werden, gegebenenfalls nach einer Modifizierungsreaktion der beispielhaft genannten Art, vorzugsweise jedoch ohne weitere Modifizierung, als Bindemittel oder Bindemittelkomponente für Beschichtungsmittel, Dichtmassen, Klebstoffe oder Druckfarben verwendet.

Für diese erfindungsgemäße Verwendung können die erfindungsgemäßen Polyhydroxylverbindungen, insbesondere in Abwesenheit von Lösungsmittel der beispielhaft genannten Art mit Hydroxylgruppen aufweisenden reaktiven Verdünnern abgemischt zum Einsatz gelangen. Hierbei handelt es sich im allgemeinen um mehrwertige Alkohole des Molekulargewichtsbereichs 62 bis 200, wie beispielsweise Ethylenglykol, Propylenglykol, 1,4-Buandiol, 2-Ethyl-1,3-hexandiol, 1,6-Hexandiol oder beliebige Gemische derartiger mehrwertiger Alkohole. Diese reaktiven Verdünner könnten auch bereits während der Pfropfcopolymerisation als Teil des Lösungsmittel zugegeben werden; dies ist jedoch keinesfalls bevorzugt. Diese reaktiven Verdünner können in einer Menge von bis zu 10 Gew.-%, bezogen auf das Gewicht der erfindungsgemäßen Polyhydroxylverbindungen zum Einsatz gelangen.

Die erfindungsgemäßen Polyhydroxylverbindungen oder ihre Lösungen können vor ihrer Verwendung auch gegebenenfalls bis zu einem Anteil von 50 Gew.-%, bezogen auf Gesamtfestkörper, abgemischt werden mit an sich bekannten, höhermolekularen Harzen und Polymeren mit einem Hydroxylgruppengehalt von 0 bis 10 Gew.-%. Beispielhaft genannt seien die an sich bekannten Polyester, Polyether, Polyacrylate, Polyurethane, Polydienharze und Epoxidharze, sowie Mischungen, Kombinationen oder Umsetzungsprodukte mit derartigen Harzen und Polymeren.

Anstelle einer nachträglichen Abmischung mit derartigen Harzen ist auch eine Zugabe dieser Harze zum Reaktionsgemisch vor der Durchführung des erfindungsgemäßen Verfahrens denkbar. Im Endergebnis würden praktisch gleiche Kompositionen entstehen, da die erfindungswesentlichen Propylenpolymerisate bzw. -copolymerisate c) Pfropfreaktionen weit eher zugänglich sind als die zuletzt beispielhaft genannten Harze bzw. Polymere, so daß in erster Näherung auch in Anwesenheit dieser Verbindungen mit einer selektiven Pfropfreaktion gerechnet werden könnte, für welche die Propylenpolymerisate bzw. -copolymerisate c) die praktisch alleinige Pfropfgrundlage bilden. Die Zugabe der zuletzt genannten Harze bzw. Polymeren vor der Durchführung der erfindungsgemäßen Copolymerisationsreaktion ist jedoch keinesfalls bevorzugt.

Die erfindungsgemäßen Verfahrensprodukte werden bei der erfindungsgemäßen Verwendung vorzugsweise in Kombination mit geeigneten Härtern verarbeitet. Geeignete Härter sind beispielsweise organische Polyisocyanate, Polyepoxide: Aminoplastharze, olefinisch ungesättigte Vernetzer wie beispielsweise acryloylfunktionelle Copolymerisate oder Veresterungsprodukte der Acrylsäure mit mehrwertigen Alkoholen, die nach dem Michael-Reaktionsprinzip reagieren können und Polyanhydride.

Besonders geeignete Härter sind organische Polyisocyanate, wobei die Mengen dieser Komponenten einem molaren NCO/OH-Verhältnis von 0,5:1 bis 2:1, vorzugsweise 0,8:1 bis 1,5:1 entsprechen. Geeignete Polyisocyanate sind z.B. die bekannten Lackpolyisocyanate, beispielsweise Biuret-, Isocyanat-oder Urethan-modifizierte Derivate einfacher Diisocyanate wie 2,4-Diisocyanatotoluol, 2,6-Diisocyanatotoluol, Isophorondiisocyanat und 1,6-Diisocyanatohexan, wobei die genannten Polyisocyanate im allgemeinen 5 bis 25 Gew.-% Isocyanatgruppen enthalten.

Die besonders bevorzugte Verwendung für die erfindungsgemäßen Polyhydroxylverbindungen besteht in ihrem Einsatz als Bindemittelkomponente in Beschichtungsmitteln. Diese Beschichtungsmittel können selbstverständlich die üblichen Hilfs- und Zusatzmittel der Lacktechnologie enthalten. Hierzu gehören beispielsweise Verlaufsmittel, z.B. auf Celluloseester-oder Oligoalkylacrylatbasis, Pigmente und Füllstoffe, viskositätskontrollierende Zusätze wie Bentonite und Kieselsäureester, Mattierungsmittel wie beispielsweise Kieselsäure, Aluminiumsilikate und hochmolekulare Wachse oder Katalysatoren für die Vernetzungsreaktionen, wie beispielsweise Zinn(II)octoat oder Dimethylbenzylamin.

Die erfindungsgemäßen Polyhydroxylverbindungen als wesentliche Bindemittelkomponente enthaltenden Beschichtungsmittel eignen sich besonders zur Beschichtung von thermoplastischen oder duromeren Kunststoffen der unterschiedlichsten Art, insbesondere zur Beschichtung von Polyolefinen einer Oberflächenspannung von mindestens 35 mN/m. Solche Polyolefine sind beispielsweise modifizierte und unmodifizierte, teilkristalline oder amorphe Polypropylene und Polyethylene. Besonders bevorzugte Substrate für die erfindungsgemäßen Beschichtungsmittel sind Formkörper, insbesondere Spritzgußteile aus Polypropylen. Daneben sind beispielhaft auch Polyvinylidenfluorid, Polytetrafluorethylen, Ethylen-Propylen-Norbornadien-Kunststoffe, Acrylnitril-Styrol-Copolymerisate, Polycarbonate, Polyamidkunststoffe, Polyester-, Polybutadien-, Polysilikone oder Zelluloseester als geeignete Substrate zu nennen. Die Beschichtungsmittel werden im allgemeinen unter Einhaltung einer Trockenfilmstärke von 0,5 bis 100, vorzugsweise 20 bis 50 µm appliziert, wobei beliebige Methoden der Kunststofflackierung zur Anwendung gelangen können. Aufgrund der Verwendung beziehungsweise Mitverwendung der erfindungsgemäßen Polyhydroxylverbindungen als wesentliche Bindemittelkomponente zeichnen sich die Beschichtungen auf den beispielhaft genannten Kunststoffen durch eine deutlich verbesserte Haftung aus. Im Falle einer Mehrschichtlackierung wird durch Verwendung eines erfindungsgemäßen Beschichtungsmittels als Grundlack eine verbesserte Lackzwischenhaftung erzielt.

Die folgenden Beispiele sollen die Erfindung näher erläutern, ohne sie jedoch einzuschränken. Ein Vergleich der erfindungsgemäßen Beispiele mit den nicht erfindungsgemäßen Beispielen belegt die Vorteile der neuen Bindemittel. Alle Angaben in "Teilen" und "%" beziehen sich auf das Gewicht.

### Beispiel 1

50 g amorphes Polypropylen mit der mittleren Molmasse Mw 150.000 g/mol werden bei 90°C in 167 g n-Butylacetat gelöst und mit 0,2 g Zinn(II)octoat und 1,5 g tert.-Butylperoxy-2-ethylhexanoat versetzt.

Nach 1 Stunde werden parallel innerhalb von 3,5 Stunden 5 g tert.-Butylperoxy-2-ethylhexanoat und innerhalb von 3 Stunden eine Monomermischung bestehend aus 40 g Hydroxyethylacrylat, 50 g n-Butylacrylat, 60 g Styrol und 50 g ε-Caprolacton zugegeben. Nach weiteren 5 Stunden bei 120°C wird der Festgehalt mit n-Butylacetat auf 50 % eingestellt.

Zur Herstellung eines Klarlacks wird die so hergestellte Lösung der erfindungsgemäßen Polyhydroxylverbindung mit 75 g einer 90%igen Lösung in Butylacetat/Solventnaphtha 100 (1:1) eines Isocyanuratgruppen aufweisenden Polyisocyanats auf Basis von 1,6-Diisocyanatohexan mit einem NCO-Gehalt der 90%igen Lösung von 19,4 %, entsprechend einem NCO/OH-Äquivalent-Verhältnis von 1:1, versetzt.

Als zu beschichtendes Substrat diente eine Platte aus handelsüblichem Dien-modifiziertem Polypropylen (®Keltan 0550, Fa. DSM), die vor dem Spritzen durch Abblasen mit ionisierter Luft entladen und von Staubpartikeln befreit wurde. Die Menge des aufgetragenen Klarlacks entspricht einer Trockenfilmstärke von 30 µm.

Es resultiert eine lösungsmittelbeständige und tieftemperaturflexible Beschichtung mit der Lackhaftung gemäß DIN 53151 von Gt 0.

### Vergleichsbeispiel zu Beispiel 1

Die Wiederholung von Beispiel 1 ohne Polypropylen als Pfropfgrundlage führt zu einer Beschichtung mit einer sehr schlechten Haftung (Gt 5).

Ein nachträgliches Unterrühren der entsprechenden Menge amorphes Polypropylen ist nicht möglich, da sich das System durch Unverträglichkeit sofort wieder entmischt.

### Beispiel 2

50 g amorphes Polypropylen mit der mittleren Molmasse Mw 16.000 g/mol werden bei 120°C in 350 g Butylacetat gelöst und mit 0,2 g Zinn(II)octoat versetzt.

Innerhalb von 3,5 Stunden werden 8 g tert.-Butylperoxy-2-ethylhexanoat in 100 g Butylacetat und parallel dazu eine Monomermischung, bestehend aus 100 g ε-Caprolacton, 80 g Hydroxyethylacrylat, 100 g n-Butylacrylat, 115 g Styrol und 5 g Acrylsäure zugegeben. Die Nachrührphase beträgt 3 Stunden bei 120°C.

Wie in Beispiel 1 beschrieben. wird die auf einen Festkörpergehalt von 50 % eingestellte Lösung der erfindungsgemäßen Polyhydroxylverbindung mit dem in Beispiel 1 genannten Polyisocyanat versetzt und wie in Beispiel 1 beschrieben auf eine Polypropylenplatte verspritzt. Das NCO/OH-Verhältnis beträgt ebenfalls 1:1.

Es resultiert eine tieftemperaturflexible Beschichtung mit guter Haftung (Gt 0-1).

### Vergleichsbeispiel zu Beispiel 2

Eine Wiederholung von Beispiel 2, jedoch ohne Polypropylen als Pfropfgrundlage führt zu einer Beschichtung ohne Haftung auf der Polypropylenplatte. Eine nachträgliche Abmischung des Beschichtungsmittels mit dem amorphen Polypropylen entmischt sich nach kurzer Zeit (Gt 5).

### Beispiel 3

50 g amorphes Polypropylen aus Beispiel 2 werden bei 120°C in 305 g Butylacetat gelöst. Innerhalb von 3,5 Stunde werden 20 g tert.-Butylperoxy-2-ethyl-hexanoat in 100 g Butylacetat und parallel dazu eine Monomermischung, bestehend aus 210 g Hydroxypropylmethacrylat (Anlagerungsprodukt von Propylenoxid an Methacrylsäure im Molverhältnis 1:1), 130 g n-Butylacrylat, 52 g Styrol und 8 g Acrylsäure zugegeben.

Nach Zugabe des Polyisocyanats und Verspritzen wie in Beispiel 1 entsteht eine lösungsmittelbeständige Beschichtung mit der guten Haftung Gt 1.

### Vergleichsbeispiel zu Beispiel 3

Die Wiederholung von Beispiel 3 ohne Polypropylen als Pfropfgrundlage führt zu einer Beschichtung ohne Haftung auf der Polypropylenplatte. Eine nachträgliche Abmischung des Beschichtungsmittels mit dem Polypropylen ist wegen Unverträglichkeit nicht möglich (Gt 5).

### Beispiel 4

500 g amorphes Polypropylen mit der mittleren Molmasse Mw 60.000 g/mol werden in einem Druckkesselreaktor bei 140°C in 2.000 g Butylacetat gelöst.

Innerhalb von 3,5 Stunden werden 150 g Di-tert.-Butylperoxid in 250 g Butylacetat und parallel dazu innerhalb von 3 Stunden eine Monomermischung, bestehend aus 2.400 g Styrol, 1.200 g Hydroxypropylmethacrylat (Anlagerungsprodukt von Propylenoxid an Methacrylsäure im Verhältnis 1:1), 400 g 2-Ethylhexylacrylat und 20 g Acrylsäure zugegeben. Nach Beendigung der Polymerisation werden 2.250 g Xylol zugefügt.

Nach Zugabe des Polyisocyanats und Verspritzen wie in Beispiel 1 entsteht eine lösungsmittelbeständige Beschichtung mit einer sehr guten Haftung (Gt 0).

### Vergleichsbeispiel zu Beispiel 4

Eine Wiederholung von Beispiel 4 ohne Polypropylen als Pfropfgrundlage führt zu einer sehr schlechten Haftung des Lackfilms auf der Polypropylenplatte (Gt 5). Eine nachträgliche Abmischung mit Polypropylen ist wegen der Unverträglichkeit nicht möglich.

### Beispiel 5

Eine entsprechend Beispiel 4 hergestellte Lösung einer erfindungsgemäßen Polyhydroxylverbindung mit den in Beispiel 4 genannten Kenndaten wird mit einer 60%igen Lösung in Butylacetat eines Anhydrid-funktionellen Copolymerisats unter Einhaltung eines Äquivalentverhältnisses von Hydroxylgruppen zu Anhydridgruppen von 1:1 vermischt und mit 1 %, bezogen auf das Gesamtgewicht des Beschichtungsmittels, Dimethylcyclohexylamin als Härtungskatalysator versetzt. Bei dem Anhydrid-funktionellen Copolymerisat handelt es sich um ein Copolymerisat aus Maleinsäureanhydrid, Methylmethacrylat, n-Butylacrylat und Styrol im Gewichtsverhältnis 100:200:300:67. Die Herstellung des Copolymerisats erfolgte entsprechend der Lehre der DE-OS 37 10 963.

Der auf diese Weise hergestellte Klarlack wurde durch Spritzauftrag auf eine Polypropylenplatte gemäß Beispiel 1 aufgetragen (Trockenfilmstärke: 30 µm). Nach 24 Stunden Trocknung erhält man einen klaren, vernetzten Film mit guter Haftung (Gt 0-1).

### Beispiel 6

100 g der 50%igen Lösung der erfindungsgemäßen Polyhydroxylverbindung gemäß Beispiel 1 wird mit 100 g einer handelsüblichen Lösung eines Polyacrylatpolyols (®Desmophen A 160, Bayer AG 60 % in Xylol, OH-Gehalt 1,6 %) abgemischt und equimolar mit dem in Beispiel 1 genannten Lackpolyisocyanat versetzt. Der Lack wird auf ein Prüfblech appliziert. Es resultiert ein klarer, lösungsmittelbeständiger, elastischer Film mit guter Haftung (Gt 1).

### Beispiel 7

100 g der 50%igen Lösung der erfindungsgemäßen Polyhydroxylverbindung gemäß Beispiel 1 wird mit 25 g eines handelsüblichen Melaminharzes (®Cymel 327, Dyno-Cyanamid) versetzt und auf ein Prüfblech appliziert. Nach 30 Minuten bei 150°C entsteht ein klarer, lösungsmittelbeständiger Film mit guter Haftung (Gt 1).

## Patentansprüche

1. Verfahren zur Herstellung von organischen Polyhydroxylverbindungen des Hydroxylzahlbereichs 15 bis 300 mg KOH/g durch radikalisch initiierte Polymerisation von
olefinisch ungesättigten Monomeren a), die zumindest teilweise alkoholische Hydroxylgruppen aufweisen,
gegebenenfalls unter Mitverwendung von bis zu 50 Gew.-%, bezogen auf das Gewicht der Monomeren a), an, in Gegenwart von alkoholischen Hydroxylgruppen zu ringöffnenden Polyadditionsreaktionen befähigten cyclischen Verbindungen b),
dadurch gekennzeichnet, daß man die Polymerisationsreaktion in
c) unter den Reaktionsbedingungen flüssigen Polymerisaten oder Copolymerisaten mit anderen Monomeren des Propylens oder in Lösungen von Polymerisaten oder Copolymerisaten mit anderen Monomeren des Propylens in organischen Lösungsmitteln als Reaktionsmedium durchführt.

2. Verfahren gemäß Anspruch 1, dadurch gekennzeichnet, daß die Monomeren a) in einer Menge von 50 bis 2000 Gew.-% bezogen auf das Gewicht der Propylenpolymerisate oder -copolymerisate c) zum Einsatz gelangen.

3. Verfahren gemäß Anspruch 1 und 2, dadurch gekennzeichnet, daß die Monomeren a) ein Gemisch aus
a1) 5 bis 50 Gew.-% an Hydroxylgruppen aufweisenden Monomeren,
a2) 50 bis 95 Gew.-% an Hydroxyl- und Carboxylgruppen-freien Monomeren und
a3) 0 bis 10 Gew.-% an Carboxylgruppen aufweisenden Monomeren
darstellen.

4. Gemäß Anspruch 1 bis 3 erhaltene Polyhydroxylverbindungen.

5. Verwendung der gemäß Anspruch 1 bis 3 erhaltenen Polyhydroxylverbindungen als wesentliche Bindemittelkomponente für Beschichtungsmittel, Dichtmassen, Klebstoffe oder Druckfarben.

6. Verwendung gemäß Anspruch 5 in Kombination mit organischen Polyisocyanaten in Polyurethanlacken.

7. Verwendung gemäß Anspruch 5 und 6 in Beschichtungsmitteln für Kunststoffe, insbesondere Polyolefine.

8. Verwendung gemaß Anspruch 5 bis 7 in Beschichtungsmitteln für Polypropylenspritzgußteile.
